# EUROPEAN PATENT APPLICATION

(11) **EP 1 940 050 A1**
(43) Date of publication of application: **02.07.2008**
(21) Application number: 05785914.2
(22) Date of filing: 21.09.2005
(51) Int. Cl.: H04B 10/08, H04J 14/00, H04J 14/02

(54) **MONITORING CONTROL LIGHT TRANSMISSION METHOD AND WAVELENGTH MULTIPLEX TRANSMISSION DEVICE IN WAVELENGTH MULTIPLEX TRANSMISSION SYSTEM**

(71) Applicant: Fujitsu Ltd., Kawasaki-shi, Kanagawa 211-8588 (JP)
(72) Inventor: GOTO, Ryosuke, Kawasaki-shi Kanagawa 211-8588 (JP)
(74) Representative: HOFFMANN EITLE
(86) International application number: PCT/JP2005/017412
(87) International publication number: WO 2007/034545

(57) **Abstract**

In a wavelength division multiplexing transmission system having an optical transmission path (5a, 5b) which transmits wavelength division multiplexed light that is main signal light, supervisory control light is transmitted through the optical transmission path (5a, 5b) in the direction opposite to the direction of the main signal light. As a result, it is possible to restrain attenuation of the supervisory control light due to a Raman scattering phenomenon, thereby increasing a relay distance.

## Description

### TECHNICAL FIELD

The present invention relates to a supervisory control light transmitting method for a wavelength division multiplexing transmission system and a wavelength division multiplexing transmission apparatus. In particular, the invention relates to technology suitable for lengthen a transmission distance of supervisory control light which is wavelength division multiplexed to main signal light with multiple wavelengths.

### BACKGROUND ART

With recent grow in capacity in communications, a wavelength division multiplexing (WDM) transmission system is widely used. In this WDM transmission system, in order to realize long distance transmission of signal light of multiple wavelengths (channels), it is necessary to compensate for loss of signal light sustained in a transmission fiber. To realize this, not only amplifiers, such aspost-amplifiersand pre-amplifiers,intransmitter stations and receiver stations but also relay optical amplifiers [for example, EDFAs (Erbiumm Doped Fiber Amplifiers) and Raman amplifiers, etc.] in relay stations are arranged at an interval of several tens km through one hundred and several tens km, to repeat amplification of signal light, thereby realizing long distance transmission.

Further, recently, OADM (Optical Add/Drop Multiplexer) nodes which drop and add arbitrary wavelengths (channels) in a relay station are increasingly used. In such a case, other function devices (hereinafter, will also be called "units") such as an optical switch and a demultiplexing and multiplexing unit are arranged in addition to a relay amplifier.
In such units as amplifiers, for example, at the time of initial activation of a system, or at the time of additionally installing channels, or at a state of line break occurring during an system operation, it is necessary for an amplifier to be controlled in such a manner that the system goes into the optimum condition such as activation, gain control, and shutting down, by means of giving control signals from outside.

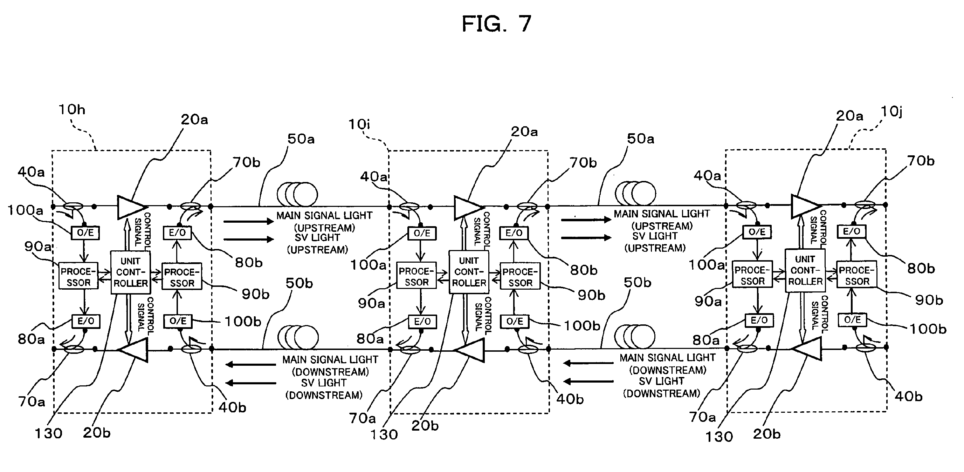

Accordingly, in a WDM transmission system, a supervisory control signal [hereinafter, will be also called SV (Supervisory) light or an SV signal], is transmitted separately frommain signal light. Using this SV light, the WDM transmission system performs monitoring of a state of each section and transmission of system information from an upstream (or downstream) relay station to a downstream (or upstream) relay station. On the basis of such information, the WDM transmission system performs optimal control of the above mentioned each unit. There are various methods for transmitting such SV light. As a general construction example, as shown in FIG. 7, for example, SV light is allocated to another wavelength than main signal light.

With attention paid to an relay section, the previous WDM transmission system shown in FIG. 7, for example, includes: multiple relay stations 10h, 10i, 10j, ... (relay stations other than the relay stations 10h, 10i, 10j are omitted in the illustration, and when these are not distinguished each other, will be described "relay station 10"), an upstream (the right direction of the paper of FIG. 7) optical transmission path (optical fiber) 50a and an downstream (the left direction of the paper of FIG. 7) optical transmission path 50b which connect between the relay stations 10 to realize bi-directional optical communications therebetween.

Then, each relay station 10 includes: an optical amplifier 20a for amplifying upstream main signal light; an optical amplifier 20b for amplifying downstream main signal light; an SV light demultiplexing coupler 40a for demultiplexing SV light which is wavelength division multiplexed in upstream WDM light together with upstream signal light; an SV light demultiplexing coupler 40b for demultiplexing SV light which is wavelength division multiplexed in down stream WDM light together with down stream signal light; an SV light combining coupler 70a for combining SV light to downstream main signal light; and an SV light combining coupler 70b for combining SV light to upstream main signal light.

Further, each relay station 10 includes: an optical/electric (O/E) converter 100a for converting upstream SV light separated from upstream light by the SV light demultiplexing coupler 40a into an electric signal; an optical/electric (O/E) converter 100b for converting SV light separated from down stream light by the SV light demultiplexing coupler 40b into an electric signal; an electric/optical (E/O) converter 80a for converting signal light (SV light) from a processor 90a, which will be described later, into signal light to be wavelength division multiplexed to downstream signal light by the SV light combining coupler 70a; an electric/optical (E/O) converter 80a for converting downstream SV signal light from a processor 90a, which will be described later, into signal light to be wavelength division multiplexed to downstream main signal light by an SV light combining coupler 70a; and an electric/optical (E/O) converter 80b for converting an upstream SV signal from a processor 90b, which will be described later, into signal light (SV light) to be wavelength division multiplexed to upstream main signal by an SV combining coupler 70b.

Further, each relay station 10 includes: processors 90a and 90b for performing various processing such as conversion of an SV signal, which is an electric signal, into a form for transmission and control; and a unit controller 130 for controlling each unit (here, optical amplifiers 20a and 20b) in accordance with a reception SV signal by means of communication with these processors 90a and 90b.
The previous system having the above described construction, for example, converts control information necessary for controlling units (optical amplifiers 20a and 20b) arranged in the relay station 10i into an SV signal by way of the unit controller 130 through the processor 90a and the processor 90b, and converts the SV signal into SV light as signal light by the electric/optical (E/O) converters 80a and 80b, and then sends out the converted SV light from the unit controller 130 to optical fibers 50a and 50b by way of the downstream and upstream SV optical combining couplers 70a and 70b.

This SV light is transmitted to a next stage relay station 10h (the downstream side of the main signal light, viewed from the relay station 10i) and the relay station 10j (the upstream side of the main signal light, viewed from the relay station 10i) by way of optical fibers 50a and 50b. In each relay station 10h, 10j, the SV light demultiplexing couplers 40b and 40a separate the transmitted light into SV light and main signal light. The main signal light is amplified by optical amplifiers 20b and 20a, and the SV light is output to an O/E converters 100b and 100a.

After that, the SV light is output to the processors 90b and 90a after conversion into an SV signal as an electric signal by the O/E converter 100b and 100a, and is then output to the unit controller 130 which controls units (optical amplifiers 20a and 20b) arranged in the relay stations 10h and 10j.
In this manner, by means of transmitting SV light to the optical fibers 50a and 50b together with the main signal, information about a transmission state among relay stations 10 is shared among relay stations 10.

For example, in the previous art, the above described method is applied to each relay station 10. At the time of initial activation, the above-mentioned SV light is sequentially transmitted from the upstream relay station 10, thereby sequentially activating units starting from the upstream relay station 10, or at the time of line break of the optical fibers 50 and 50b, the relay station 10 which detects a line break notifies such of the upstream relay station 10 with SV light to shut down an output (output of the optical amplifiers 20a and 20b) of the upstream relay station 10, so that each unit is optimized.

Here, recently, with increase in the number of channels of a WDM signal, this SV light is affected. More precisely, the power of SV light in the optical transmission paths 50a and 50b transits to the main signal light, so that a distance among relay stations 10 is limited because of a problem of link budget (a difference between the transmission level and the reception level) of the SV light. This problem is caused by a Raman scattering phenomenon which is one of the non-linear phenomenons occurring in the optical fibers 50a and 50b.

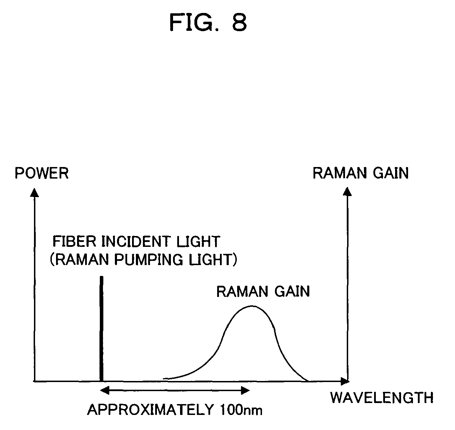

Here, a simple description of a Raman scattering phenomenon (Raman gain) will be made, referring to FIG. 8.
The graph of FIG. 8 shows wavelength characteristics of the power of incoming light to the fiber (Raman pumping light) and a Raman gain due to a Raman scattering phenomenon. In the graph of FIG. 8, the vertical axis indicates shows wavelength characteristics of the power of incoming light from a fiber and a Raman gain due to a Raman scattering phenomenon, and the horizontal axis indicates wavelength.
As described in FIG. 18, when coherent light of having great power is input in an optical fiber, a Raman gain band as shown in the drawing occurs in a region which is shifted from a wavelength of incoming light to the fiber to the long wavelength side by approximately 100 nm. The level of this Raman gain band is small enough to be ignored in a case where the incoming light to the fiber is small. However, as the power of incoming light increases, effects of non-linear light phenomenon become larger up to the level which cannot be ignored.

Then, if there is another light of great power (light to be amplified) in this Raman gain band, the light to be amplified is amplified by means of obtaining power from the incoming light. That is, if the SV light substitutes for the incoming light, and the main signal light of WDM light substitutes for the light to be amplified, the power of SV light transits to the main signal light while the SV light is being propagating through the optical fibers 50a and 50b, so that a value of loss which can be allocated to loss in a transmission path is decreased.

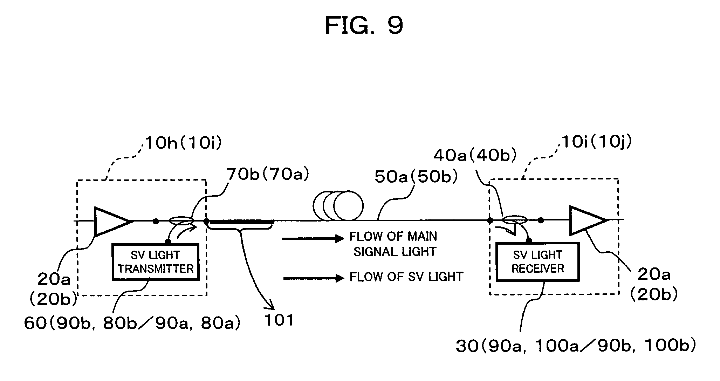

Here, the power of the main signal becomes maximum in the vicinity of transmission output of the relay station 10, and as it propagates through the optical fiber 50a (50b), the power lowers due to effects of loss in the transmission path. Thus, at positions closer to the vicinity of the above transmission output, SV light power becomes lower because the greater SV light power transits to the main light signal.
That is, in the WDM transmission system as shown in FIG. 9, lowering power of the SV light due to a Raman scattering phenomenon significantly occurs at the vicinity of transmission output shown by the reference character 101. In this instance, in FIG. 9, members given the same reference characters as those in FIG. 7 are the same as or similar to the members already described with reference with FIG. 7. An SV light transmitter 60 in the relay station 10h (10i) corresponds to a block composed of a processor 90b and an E/O converter 80b (processor 90a and E/O converter 80a) in FIG. 7. Likewise, an SV light receiver 30 in the relay station 10i corresponds to a block composed of a processor 90a and an O/E converter 100a (processor 90b and O/E converter 100b).

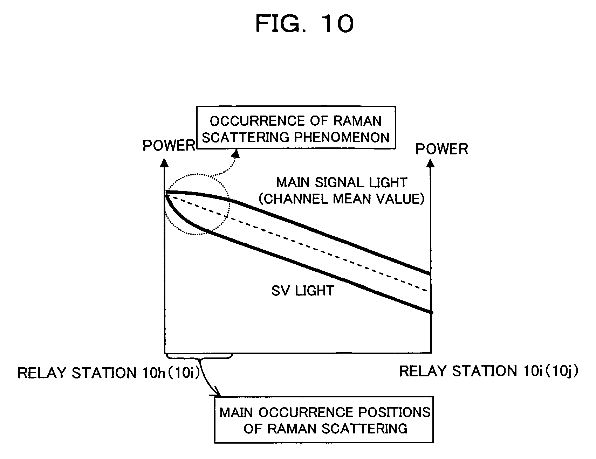

Hereinafter, a description will be made of changes in the power of main signal light and SV light shown in FIG. 10 by use of a distance characteristics diagram.
In the graph of this FIG. 10, the vertical axis shows the power of main signal light and SV light; the horizontal axis shows a position in a longitudinal direction of the optical transmission path 50a (50b). In the above described example, it is assumed that the left end of the horizontal axis shows a relay station 10h (10i); the right end of the horizontal axis shows a relay station 10i (10j). In this instance, the dotted line in FIG. 10 represents changes in the power of the main signal light and of the SV light in a case where a Raman scattering phenomenon does not occur.

As indicated by the graph, a Raman scattering phenomenon mainly occurs in the vicinity of the relay station 10h (10i) (transmitter) where transmission loss due to the optical transmission path 50a (50b) is still small. In the vicinity of this position, the power of the SV light transits to the main signal light, thereby amplifying the power (the mean value among the number of channels) of the main signal light, while the power of the SV light is decreased. As a result, the power of the SV light at the relay station 10i (10j)(receiver) is significantly lowered in comparison with the power of the main signal light because of effects of transmission loss due to the optical transmission path 50a (50b).

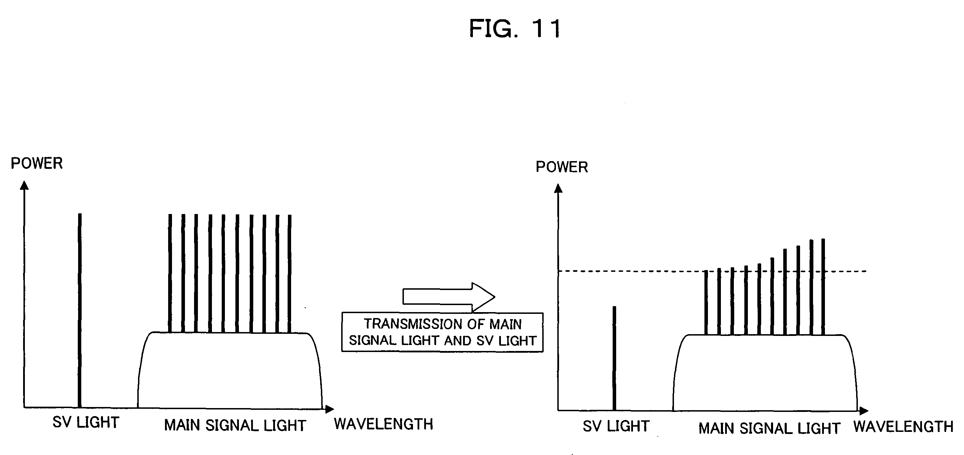

Hence, as shown in FIG. 11, for example, provided that a certain relay station 10 generates each channel signal light of the main signal light and SV light at the same level (see the left side of FIG. 11) at the relay station 10 of the next stage (the reception end), the power of the main signal light is increased in the relay station 10 at the next stage receiver end due to effects of a Raman scattering phenomenon at the optical transmission path 50a (50b), while the power of the SV light is decreased (see the right side of FIG. 11). In this instance, the dotted line in the relay station 10 (the right side of FIG. 11) at the reception end, similar to FIG. 10, represents the power (arrival level) at the main signal light and the SV light when a Raman scattering phenomenon does not occur. Further, at the relay station 10 (the right side of FIG. 11) of the reception end, the power of channel signal light increases as the wavelength become longer. This is because, as shown in FIG. 8, a Raman gain band has wavelength-dependent dispersion characteristics.

As described above, in a WDM transmission system, if main signal light (light to be amplified) exists in the Raman gain band as shown in FIG. 8, the power of SV light transits to the main signal light during propagation through the optical transmission paths 50a and 50b, so that a loss value which can be allocated to loss in the transmission path is reduced for that. That is, link budget of the SV light becomes an issue, so that the maximum loss between the relay stations permissible as a system is limited. In recent great capacity WDM transmission systems, the number of channels of main signal light sometimes exceeds 100. Thus, there is an issue that as the number of channels is increased (as the number of beams of light to be amplified is increased), the power reduction amount of the SV light increases.

To resolve such an issue, it is considerable that the wavelength of the SV light and the main signal light are set to wavelengths at which SV light and a Raman scattering phenomenon do not mutually exert effects due to a Raman scattering phenomenon. For example, it is considerable that the wavelength of the SV light is given a wavelength being separated from the main signal by not less than 100 nm, or that the wavelength of SV light is set to a wavelength longer than the main signal light.
In addition, to compensate for the power reduction amount of the SV light, there is a method in which the SV light is transmitted after its power is made as great as possible at the sender end, on the assumption that a Raman scattering phenomenon occurs.

Further, as another method, there is a method in which SV light is not given a wavelength dedicated to itself, and the SV light is superimposed to main signal light (for example see the following patent documents 1 and 2).
In this instance, as a technique for bi-directionally transmitting SV light, there is a method in which a channel is newly added to an optical transmission path which transmits main signal light for realizing bi-directional communications of SV light (for example, see the following patent document 3).
Patent Document 1: Japanese Patent Application Laid-open No. 2003-114453
Patent Document 2: Japanese Patent Application Laid-open No. 2003-32193
Patent Document 3: Japanese Patent Application Laid-open No. 2001-358665

### DISCLOSURE OF THE INVENTION

### PROBLEMS TO BE SOLVED BY INVENTION

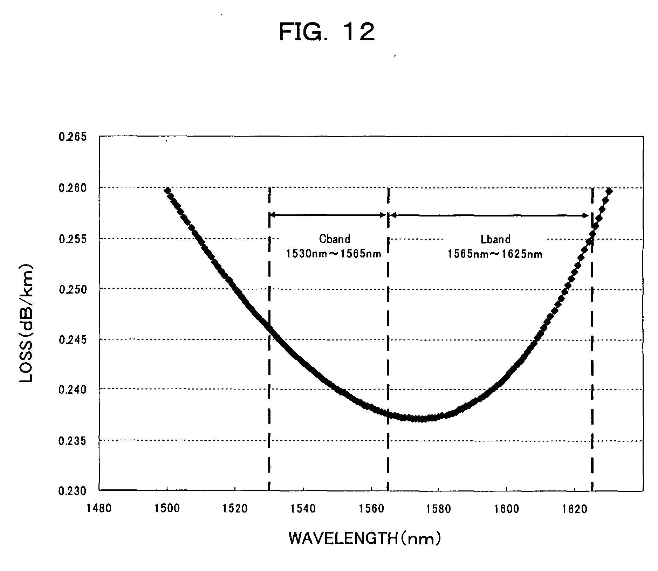

However, as shown in FIG. 12, for example, the optical transmission paths (optical fibers) 50a and 50b generally have wavelength-dependant loss characteristics such that they takes the minimum transmission loss in the vicinity of 1560 nm through 1580 nm, and that in other regions, the longer the distance from the above band, the greater the transmission loss. Taking such characteristics into account, there is an issue in the above method in which SV light and main signal light are set to wavelength such that they does not mutually exert effects of a Raman scattering phenomenon.

That is, as a wavelength band of main signal light, band *C* (1530 nm through 1565 nm) and band *L* (1565 nm trough 1625 nm) are mainly used because loss therein is small and it is easy to amplify light in that band. Thus, if it is attempted to select a wavelength of SV light under this condition, it becomes optimum that a wavelength with the smallest loss in the other wavelength band than the wavelength band of the main signal light, so that the immediately shorter side of band *C* is inevitably selected. Accordingly, as described above, in the described methods in which a wavelength separated from the wavelength band of the main signal light by not shorter than 100 nm is selected as the wavelength of the SV light, or in which the wavelength of the SV light is set to the longer wavelength side of the main signal, although effects of a Raman scattering phenomenon can be removed, loss in a transmission path becomes greater for that. Hence, there still remains a problem of link budget of SV light, so that a distance between relay stations is limited.

Further, as described in the above described method, in a case where transmission is performed after the power at the transmission end is made to be as great as possible beforehand in order to compensate for the amount of power reduction of SV light, assuming that a Raman scattering phenomenon occurs, not only a Raman phenomenon but also a stimulated Brillouin scattering which is another non-liner phenomenon becomes significant, so that it is afraid that transmission of the SV light itself becomes incapable. Inaddition, since a light emitting device (LD) with a great output power is necessary for generating SV light of high power, the method is disadvantageous in costs.

Furthermore, as described in the above patent documents 1 and 2, in a case where SV light is superimposed to SV light in transmission, since the transmission losses of the main signal light and the SV light are equal, the problem of link budget of the SV light is resolved. However, in such a case, as it is assumed that any kind of main signal light inevitably passes for transmitting the SV signal, there is a problem that at the initial activation of a system, no signal light passes yet, so that SV light which functions as a trigger signal at the activation of units cannot be transmitted. This makes it impossible to activate units.

Still further, as the method described in the above patent document 3, in a case where another channel for SV light is newly added to a transmission path in order to transmit the SV light bi-directionally, also, since the wavelengths of the main signal light and the SV light are normally set to wavelengths already described, it is still impossible to prevent power transition between the main signal light and the SV light transmitted in the same direction, so that there remains a problem of increase in reduction of the amount of power of the SV light. In this instance, the above patent document 3 does not disclose how to select the wavelength of SV light.

In view of the above described issues, the present invention is proposed. The invention is objected to make it possible to provide a dedicated supervisory control light wavelength and to select a supervisory control light wavelength such that transmission loss thereof is as small as possible. Additionally, the present invention is also objected to make it possible to restrain the power of supervisory control light which is deprived of by the main signal due to a Raman scattering phenomenon as small as possible to lengthen a relay distance.

### MEANS TO SOLVE THE PROBLEMS

In order to accomplish the above objects, according to the present invention, there is provided a supervisory control light transmitting method for a wavelength division multiplexing (WDM) transmission system having an optical transmission path which transmits WDM light that is main signal light, the method comprising: transmitting supervisory control light, being capable of generating a Raman gain due to a Raman scattering phenomenon in the wavelength band of the main signal light, in the opposite direction to the direction in which the main signal light is transmitted.

As a preferred feature, the supervisory control light has a wavelength shorter than the wavelength band of the main light, and the wavelength band of the main signal light is band *C* or band *C* and band *L*.
As another preferred feature, the supervisory control light transmitting method further comprises: on a reception end of the supervisory control light, supervising power of the supervisory control light; and halting transmission of the main signal light to the optical transmission path, or lowering the transmission level of the main signal light to the optical transmission path down to a predetermined light level, upon detection of abnormality in the optical transmission path as a result of the supervising.

As a generic feature, there is provided a transmission apparatus connected with an optical transmission path to transmit WDM light that is main signal light, which apparatus is an element of a WDM transmission system, the transmission apparatus comprising: receiving means which receives the main signal light transmitted through the optical transmission path; supervisory control light generating means which generates supervisory control light having a wavelength being capable of generating a Raman gain due to a Raman scattering phenomenon in the wavelength band of the main signal light; and supervisory control light transmitting means which transmits supervisory control light band, generated by the supervisory control light generating means, to the optical transmission path in the direction opposite to the direction of the main signal light.

As another generic feature, there is provided a transmission apparatus connected with an optical transmission path to transmit WDM light that is main signal light, which apparatus is an element of a WDM transmission system, the transmission apparatus comprising: a transmitting means which transmits the main signal light to the optical transmission path; a supervisory control light separating means which separates supervisory control light which is transmitted in the opposite direction to the direction of the main signal through the optical transmission path and has a wavelength that can generate a Raman gain in the wavelength band of the main signal light due to a Raman scattering phenomenon; and a supervisory control light receiving means which receives the supervisory control light separated by the supervisory control light separating means.

As a preferred feature, the supervisory control light receiving means includes: a supervising unit which supervises power of the supervisory control light; and a controlling unit which halts transmission of the main signal light to the optical transmission path, or lowers the transmission level of the main signal light to the optical transmission path down to a predetermined light level, upon detection of abnormality of the optical transmission path as a result of the supervising, and the supervisory control light has a wavelength shorter than the wavelength band of the main light.

As another preferred feature, the wavelength band of the main signal light is band *C* or band *C* and band *L*.

### RESULT OF THE INVENTION

According to the present invention, the following advantages are guaranteed. Since supervisory control light having a wavelength which can generate a Raman gain in the wavelength band of main signal light due to a Raman scattering phenomenon is transmitted through an optical transmission path in the direction opposite to the direction of the main signal light, the power of the supervisory control light is lowered because of transmission loss due to the optical transmission path in the vicinity of the transmitter end of the main signal light. In contrast, the power of the supervisory control light is large in a region in which the power of the main signal light is lowered to some extent because of transmission loss due to the optical transmission path, that is, in the vicinity of a receiver end of the main signal light. Accordingly, in comparison with a case where main signal light and supervisory control light are transmitted through an optical transmission path in the same direction, the amount of the power of the supervisory control light transited to the main signal light becomes small, so that it is possible to restrain the degree of attenuation of the supervisory control light due to a Raman scattering phenomenon. As a result, problems caused by link budget of the supervisory control light are resolved, so that it is possible to lengthen a relay distance.

In addition, since the supervisory control light is transmitted in the direction opposite to the direction of the main signal, it is possible to immediately perform shutting down of the main signal light or transmission power control upon detection of abnormality in the optical path when the supervisory control light cannot be received normally, so that counteractive processing time at the time of an occurrence of abnormality is shortened, and resultantly safeties are improved.

### BRIEF DESCRIPTION OF THE DRAWINGS

FIG. 1 is a block diagram showing a construction of a wavelength division multiplex (WDM) transmission system according to one preferred embodiment of the present invention;
FIG. 2 is a block diagram showing a simplified construction of the WDM transmission system according to one preferred embodiment of the present invention;
FIG. 3 is a diagram showing an example of power transmission distance characteristics of main signal light and SV light in the WDM transmission system according to one preferred embodiment of the present invention;
FIG. 4 is a diagram schematically showing an example of power spectrum of main signal light and SV light in each relay station of the WDM transmission system according to one preferred embodiment of the present invention;
FIG. 5 is a diagram showing an example of simulation results of the WDM transmission system according to one preferred embodiment of the present invention;
FIG. 6 is a block diagram for describing shutting down control in the WDM transmission system according to one preferred embodiment of the present invention;
FIG. 7 is a block diagram showing a construction of a previous WDM transmission system;
FIG. 8 is a diagram schematically showing an example of wavelength characteristics of a Raman scattering phenomenon;
FIG. 9 is a diagram for describing a position at which a Raman scattering phenomenon outstandingly occurs in the previous WDM transmission system;
FIG. 10 is a diagram showing power transmission distance characteristics of main signal light and SV light in the previous WDM transmission system;
FIG. 11 is a diagram showing power spectra before and after transmission of main signal light and SV light in the WDM transmission system; and
FIG. 12 is a diagram showing wavelength characteristics of transmission loss in a common optical fiber.

### REFERENCE OF SYMBOLS

1c, 1d, and 1e...relay station (WDM transmission apparatus)
2a, 2b...optical amplifier
3...SV light receiver
4a and 4b...SV light separating coupler
5a and 5b...transmission fiber
6...SV light transmitter
7a and 7b...SV light combining coupler
8a and 8b...E/O converter
9a and 9b...processor
10a and 10b...O/E converter
11...unit controller
12a and 12b...power monitor

### BEST MODE FOR CARRYING OUT THE INVENTION

One preferred embodiment of the present invention will now be described with reference to the relevant accompanying drawings.

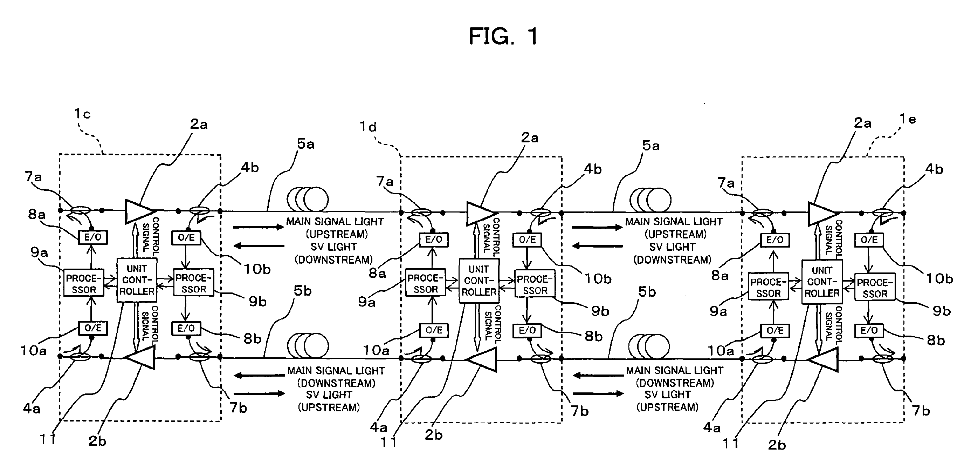

FIG. 1 is a block diagram showing a construction of a wavelength division multiplex (WDM) transmission system relating to one preferred embodiment of the present invention.
As shown in FIG. 1, the present WDM transmission system includes: multiple relay stations 1c, 1d, 1e, ... (hereinafter, others than 1c, 1d, and 1e are omitted in the illustration, and are referred to as "relay station 1" in cases where no distinction is made thereamong) ; an upstream optical transmission path (optical fiber) 5a which connects each relay station 1 (the right direction in the paper of FIG. 1) for making possible bi-directional light communication among stations 1; and a downstream (the left direction in the paper of FIG. 1) optical transmission path (optical fiber) 5b (hereinafter, sometimes referred to as transmission fibers 5a and 5b).

Further, each relay station 1 has optical amplifiers 2a and 2b, SV light separating couplers 4a and 4b, SV lights combining couplers 7a and 7b, an electric/optical (E/O) converters 8a and 8b, processors 9a and 9b, optical/electric (O/E) converters 10a and 10b, and a unit controller 11. In this instance, in cases where it is unnecessary to distinguish optical amplifiers 2a and 2b, they will sometimes be referred to as optical amplifiers 2. In addition, as to other construction elements will be sometimes described in the similar way.

Here, in each relay station 1, the optical amplifier 2a is for amplifying upstream signal light flowing in the present WDM transmission system, and the optical amplifier 2b is for amplifying downstream signal light. Both of those use, for example, EDFA, a Raman amplifier, or the like. These optical amplifiers 2a and 2b are controlled by the unit controller 11 to perform operations of activation, gain control, shutting down, etc.

Further, the SV light separating coupler 4a has a function as a supervisory control light separating means for the transmission fiber 5b, and is for separating and taking out SV light transmitted through the transmission fiber 5b in the direction (upstream direction) opposite to the downstream main signal light transmitted in the direction (upstream), and also has a function as a transmitting means for transmitting downstream main signal light amplified by the optical amplifier 2b to the relay station 1 on the downstream side through the transmission fiber 5b.

Likewise, the SV light separating coupler 4b has a function as a supervisory control light separating means for the transmission path 5a, and is for separating and taking out SV light transmitted through the transmission fiber 5a in the direction (downstream direction) opposite to the upstream direction, and also has a function as a transmitting means for transmitting upstream signal light amplified by the optical amplifier 2a to the relay station 1 on the upstream side through the transmission fiber 5a.

Further, the SV light combining coupler 7a has a function as a supervisory control light combining means for the transmission fiber 5a, and combines downstream SV light from the E/O converter 8a to upstream transmission fiber 5a, and transmits the SV light in the direction opposite to the direction of main signal light transmitted through the transmission fiber 5a. That is, the SV light combining coupler 7a has a function of a receiving means for receiving upstream main signal light transmitted through the transmission fiber 5a, together with an optical amplifier 2a.

Likewise, the SV light combining coupler 7b has a function as a supervisory control light combining means for the transmission fiber 5b, and combines upstream SV light from the E/O converter 8b to the transmission fiber 5b, and transmits the SV light in the direction opposite to the direction of the main signal light transmitted through the transmission fiber 5b. That is, SV light combining coupler 7b also has a function as a receiver means for receiving downstream main signal light transmitted through the transmission fiber 5b, together with the optical amplifier 2b.

The E/O converter 8a functions as a supervisory control light generating means together with the unit controller 11 and processor 9a. It converts a downstream SV signal as an electric signal from the processor 9a into a light signal (SV light) and outputs the SV signal to the SV light combining coupler 7a. The E/O converter 8b functions as a supervisory control light generating means together with the unit controller 11 and the processor 9b. It converts an upstream SV signal as an electric signal from the processor 9b into a light signal (SV light), and then outputs the light signal to the SV light combining coupler 7b. In this instance, these E/O converters 8a and 8b are constructed using, for example, a laser diode.

Further, the O/E converter 10a functions as a supervisory control light receiving means together with the processor 9a and the unit controller 11. It converts input light (here, upstream SV light separated by the SV light separating coupler 4a) into an electric signal, and outputs the electric signal to the processor 9a. The O/E converter 10b similarly converts input light (here, down stream SV light separated by the SV light separating coupler 4b) into an electric signal, and then outputs the electric signal to the processor 9b. These O/E converters 10a and 10b are constructed using, for example, a photodiode.

In addition, while the processor 9a transmits the reception upstream SV signal as an electric signal from the O/E converter 10a to the unit controller 11, it generates a necessary downstream SV signal under an instruction from the unit controller 11 and transmits the generated SV signal to the E/O converter 8a. The processor 9a is also capable of performing mutual format conversion or the like suitable for transceiving of the SV signal between the O/E converter 10a and the E/O converter 8a and the unit controller 11.

Likewise, while the processor 9b transmits a reception downstream SV signal as an electric signal from the O/E converter 10b to the unit controller 11, it also generates a necessary upstream SV signal under an instruction from the unit controller 11, and transmits the generated SV signal to the E/O converter 8b. The processor 9b is also capable of performing mutual format conversion or the like suitable for transceiving of the SV signal between the O/E converter 10b and the E/O converter 8b and the unit controller 11.

That is, the E/O converter 8a (8b) functions as a supervisory control light generating means for generating SV light, together with the processor 9a (9b) and the unit controller 11. The O/E converter 10a (10b) functions as a supervisory control light receiving means for receiving downstream SV light separated by the SV light splitting coupler 4, together with the processor 9a (9b) and the unit controller 11.
Then, the unit controller 11 controls the whole of the relay station 1. On the basis of the SV signal received from the processors 9a and 9b, the unit controller 11 transmits a control signal for controlling a unit (here, the optical amplifier 2) to the unit, and controls the processors 9a and 9b in order to generate an SV signal to be transmitted to the upstream or the downstream direction.

In this instance, it is assumed that the wavelength the band of the main signal light in the present system is, as already described with reference to FIG. 12, band *C* (1530 nm to 1565 nm), or both of band *C* and band *L* (1565 nm to 1625 nm), with consideration paid to increasing the amount of transmission information while restraining the fiber loss down to the minimum and to the easiness of amplification. In addition, as to the wavelength of SV light, a wavelength shorter (short wavelength side of band *C*) than the wavelength band of the main signal light, for example, a wavelength around 1510 nm is selected, in order to make a fiber loss down to the minimum. In this case, as already described with reference to FIG. 8, a Raman gain occurs in the wavelength band of the main signal due to a Raman scattering phenomenon. In other words, SV light of the present example has a wavelength for generating a Raman gain in the wavelength band of the main signal light due to a Raman scattering phenomenon.

Hereinafter, a description will be made of an operation of the WDM transmission system according to the present embodiment with the construction as described above.
First of all, the main signal light is transmitted in the similar method to the previous art. That is, in the upstream direction of the main signal light, the main signal light transmitted from a transmitter station (not illustrated) is input to the optical amplifier 2a by way of the SV light combining coupler 7a of the relay station 1c, and is then transmitted to the transmission fiber 5a by way of the SV light separating coupler 4b after being amplified by the optical amplifier 2a. By means of repeating such transmission, the main signal light is finally received by a receiver station (not illustrated) by way of the relay station 1d, the transmission fiber 5a, and the relay station 1e in order.

Likewise, in the downstream direction of the main signal light, the main signal light transmitted from a transmitter station is input to the optical amplifier 2b by way of the SV light combining coupler 7b of the relay station 1e, and is transmitted to the transmission fiber 5b by way of the SV light separating coupler 4a after being amplified by the optical amplifier 2b, and then is finally received by a receiver station by way of the relay station 1d, the transmission fiber 5b, and the relay station 1c in order.
In contrast, according to the present invention, the SV light is transmitted through the transmission fiber 5, through which the main signal light is transmitted, in the direction opposite to the direction of the main signal. That is, as described above, when the main signal light is transmitted in the upstream direction, the SV light is transmitted through the same transmission fiber 5 in the direction opposite to the direction of the main signal light, that is, the downstream direction. For example, from the relay station 1e which receives the upstream signal light from the relay station 1d through the transmission fiber 5a, the SV light combining coupler 7a combines the downstream SV light to the same transmission fiber 5a. As a result, the SV light is transmitted to the relay station 1d in the direction opposite to the direction of the main signal light.

In the relay station 1d, the above mentioned downstream SV light transmitted through the transmission fiber 5a is separated by the SV light splitting coupler 4b and then input to the O/E converter 10b, in which the split light is subjected to optical/electrical conversion into an SV signal as an electric signal, and is then transmitted to the processor 9b.
Further, the SV signal is transferred to the unit controller 11. If the SV signal is destined to the relay station 1d, the unit controller 11 performs unit control (transmission power control of the optical amplifiers 2a and 2b, etc.) in accordance with the contents of the SV signal. In this instance, it is possible to recognize whether or not the SV signal is destined to the relay station 1d by means of node recognition information set to the SV signal. In addition, if the reception SV signal is not destined to the relay station 1d, the unit controller 11 does not perform particular processing to the relay station 1d. However, if the SV signal is destined to another relay station 1 (for example, relay station 1c), the SV signal is transferred to the relay station 1c of the next stage (the downstream side) by way of the processor 9a, the E/O converter 8a, and the SV light combining coupler 7a on the opposite side.

At that time, the SV signal is updated based on the state of the transmitter device (that is, the transmitter device and transmission path) in the processors 9a and 9b. Then, the SV light transmitted to the transmission fiber 5a by the SV light combining coupler 7a is separated by the SV light splitting coupler 4b in the relay station 1c, similarly to the operation of the above mentioned relay station 1d, and is transmitted to the unit controller 11 by way of the O/E converter 10b and the processor 9b, and is subjected to necessary unit control in accordance with the reception SV signal, and is subjected to transmission processing of the SV light . In this instance, transmission of upstream SV light is performed in a similar manner with respect to the upstream SV light.

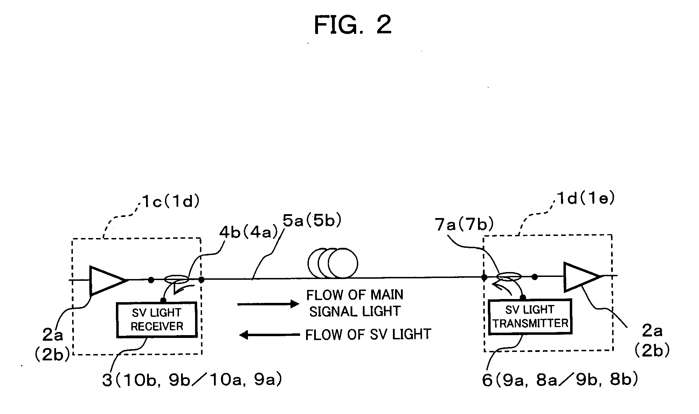

As described above, the SV light is transmitted among the relay stations 1, so that it becomes possible to supervise the state of between each relay station 1 and to transmit information of the upstream (or down stream) relay station to a downstream relay station. On the basis of such information, it becomes possible to optimize the above mentioned unit control based on such information.
Next, referring to FIG. 2 through FIG. 5, a description will be made of effects of a Raman scattering phenomenon according to the present embodiment.

FIG. 2 is a block diagram simply showing a WDM transmission system according to the present embodiment, which has a construction with attention paid to one relay section in one direction. In this FIG. 2, items with reference characters already described are the same or similar to the previously described ones. In addition, the SV light receiver 3 corresponds to a block composed of the O/E converter 10b and the processor 9b (or O/E converter 10a and processor 9a). The SV light transmitter 6 corresponds to a block composed of the processor 9a and E/O converter 8a (or processor 9b and E/O converter 8b).

In FIG. 2, in the beginning, the mains signal light is transmitted from the relay station 1c (or 1d) to the relay station 1d (or 1e) through the transmission fiber 5a (or 5b), as described above. On the other hand, the SV light is transmitted by the SV light transmitter 6 of the relay station 1d (or 1e), and is transmitted through the transmission fiber 5a (or 5b) in the direction of the direction opposite to the direction of the main signal, and is then received by the SV light receiver 3 of the relay station 1c (or 1d).

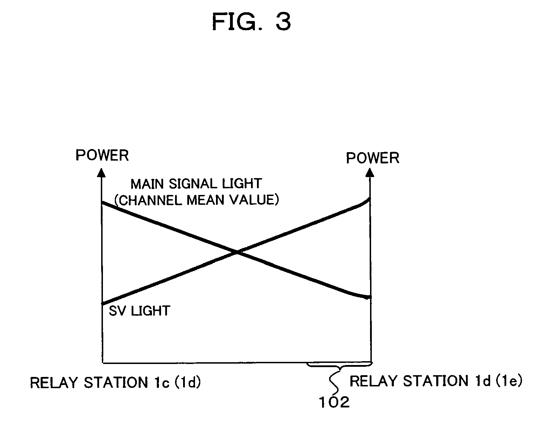

FIG. 3 shows an example of the transmission distance characteristics of the power of the main signal light and the SV light at that time.
As shown in FIG. 3, in the relay station 1c (or 1d) which is the transmission end of the main signal light, the power of the main signal light (channel mean value) is the maximum because it is before being subjected to the transmission loss due to the transmission fiber 5a (or 5b) while the power of the SV light is the minimum because of transmission loss of the transmission fiber 5a (or 5b).

In contrast, in the relay station 1d (or 1e) which is the receiver end of the main signal light, the power of the main signal light is the minimum because it is before being subjected to the transmission loss due to the transmission fiber 5a (or 5b). On the other hand, the power of the SV light is the maximum because of transmission loss of the transmission fiber 5a (or 5b), and the power of the SV light is the maximum because it is before being subjected to the transmission loss due to the transmission loss due to the transmission fiber 5a (or 5b).
That is, this is because the main signal light and the SV light are transmitted through the same transmission fiber 5, and are equally attenuated due to the transmission loss of the transmission fiber 5.

Then, in the present example, since a Raman scattering phenomenon is a non-linear phenomenon, it mainly occurs in the vicinity of the relay station 1d (or 1e) which is the transmitter station (receiver station of the main signal light) of the SV light and where the SV light is relatively large, as shown with reference character 102 in FIG. 3. However, in the vicinity of the relay station 1d (or 1e), an amplification effects due to a Raman scattering phenomenon becomes smaller than the previous art (in a case where main signal light and SV light are transmitted in the same directions) since the power of the main signal light, as amplified light, becomes smaller than the amplification effects due to a Raman scattering phenomenon. That is, power transition from the SV light to the main signal light due to a Raman scattering phenomenon is smaller than the previous art, so that the attenuation of the SV light due to a Raman scattering phenomenon is restrained.

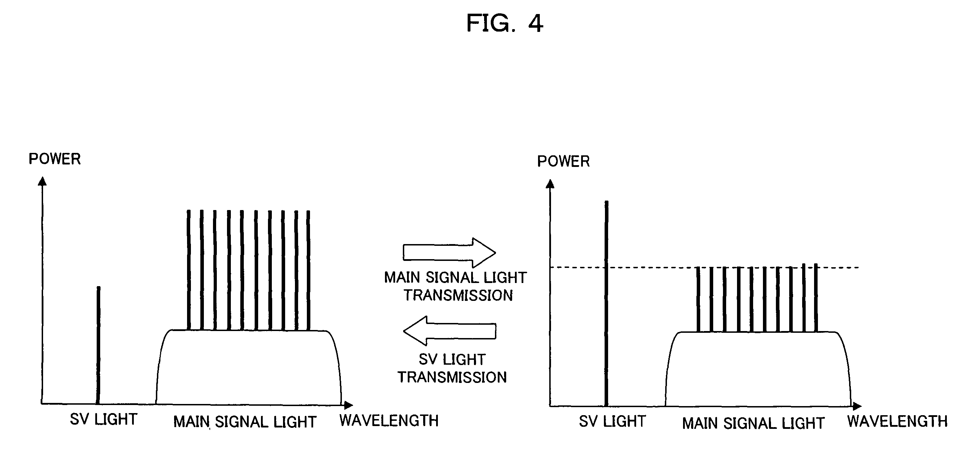

Here, FIG. 4 is a diagram schematically showing an example of the power spectrum of each signal light in the relay station 1c (or 1d) and the relay station 1d (or 1e). The left side of FIG. 4 shows the power spectra of the main signal light and the SV light in the relay station 1c (or 1e) (the receiver station of the main signal light and the transmitter station of the SV light).

That is, the left side of FIG. 4 shows reception power of the SV light received by the relay station 1c (or 1d) and transmission power of the main signal light transmitted from the relay station 1c (or 1d). The right side of FIG. 4 shows the transmission power of the SV light transmitted from the relay station 1c (or 1d) and the transmission power of the SV light and the reception power of the main signal light received by the relay station 1d (or 1e).
As shown in FIG. 4, in comparison with the previous power spectrum (see FIG. 11), amplification effects to the main signal light due to a Raman scattering phenomenon is small. That is, it is shown that the amount of power transition from the SV light to the main signal light is restrained, so that power attenuation of the SV light is reduced.

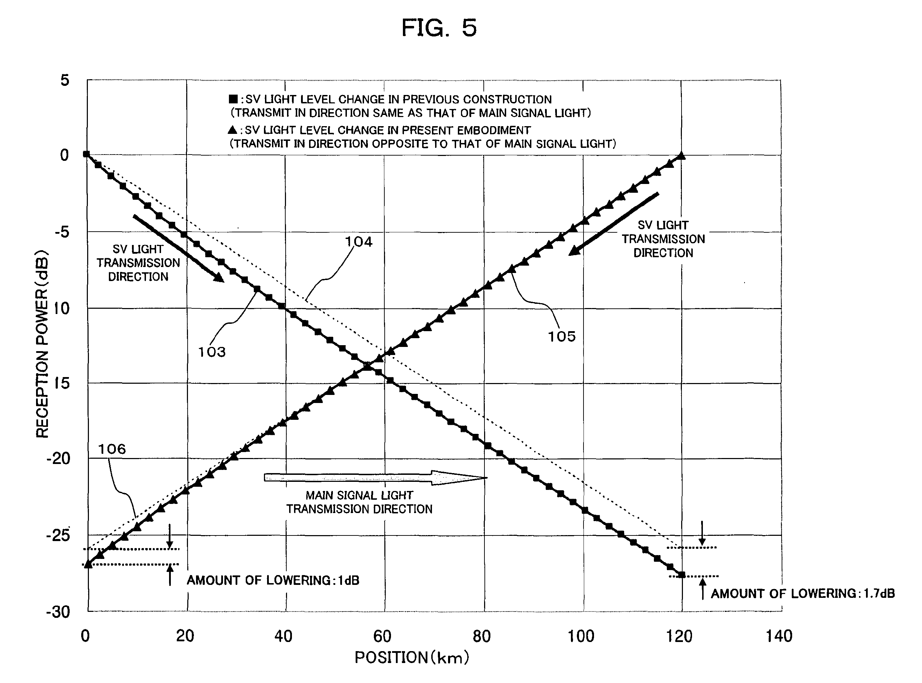

The above matter will be described hereinafter using simulation results shown in FIG. 5. In this instance, in the present simulation, calculation is performed using DSF (Dispersion Shifted Fiber) as a transmission fiber 5. The main signal light is in the wavelength band *C*, the number of channels (the number of WDM wavelengths) is 40, the transmission output level is +3 dBm. In addition, as to the SV light, the wavelength is 1510 nm, the transmission output level is +6 dBm. Further, the distance between the relay stations 1 is 120 km (loss with respect to signal light of a wavelength of 1550 nm is 24 dB).

Then, as described in FIG. 5, in a case in which the main signal light and the SV light are transmitted through the transmission fiber 5 in the same direction, the power of SV light is significantly attenuated in the vicinity of transmission end (approximately 0 km through 20 km) because the power of the SV light is greatly taken by the main signal light at the transmission end, as shown by the solid line 103, since the power of both of the main signal light and the SV light is high. After transmission of 120 km, when no Raman scattering phenomenon is exists (in a case where only transmission loss occur: see the dotted line 104), the SV light is lowered by approximately 1.7 dB in comparison with a case where a Raman scattering phenomenon does not exerts effects. In contrast, in a case where the transmission method according to the present embodiment is used, that is, when both of the main signal light and the SV light are transmitted through the same transmission fiber 5 in opposite directions, as shown by the reference character 105, since the power of the main signal light is lowered at the reception end of the main signal light with the maximum transmission power of the SV light, the amount of transition of the SV light power to the main signal light due to a Raman scattering phenomenon is smaller than that of the previous art. Thus, even after transmission of 120 km, the lowering amount is restrained to the degree of about 1.0 dB in comparison with a case where a Raman scattering phenomenon does not occur (see the dotted line 106), so that the attenuation amount of the SV light is improved by approximately 0.7 dB.

Accordingly, according to the supervisory control light transmission method in the WDM system of the first embodiment of the present invention, since the attenuation of SV light due to Raman scattering can be restrained, it becomes possible to realize long distance transmission of SV light. Thus, problems due to link budget of SV light are resolved, so that it becomes possible to lengthen a relay distance. That is, it is possible to reduce the number of relay stations necessary for the WDM system, thereby significantly contributing to cost reduction.

Here, in a case where main signal light and SV light are transmitted through the same transmission fiber 5 in the opposite directions, there is a difference in control based on the SV light in the relay station 1. That is, when SV light is sequentially transmitted to each relay station 1, only a transmission fiber which transmits SV light differs from the previous one (upstream/downstream are exchanged), and the other control is similar to the previous control. However, it becomes necessary to make changes in control, such as shutting down or the like performed at the time of occurrence of disorder like a line break, which has been performed by means of transmitting (feedback) the SV light through the transmission fiber 5 for transmitting the main signal light to the transmitter end, which transmission fiber 5 is different from a transmission fiber 5 in which a disorder such as a line break occurs from the receiver end of the SV light to the transmission end in the previous case.

For example, when shutting down control is performed in the previous case, if a line break occurs in the transmission fiber, the power of reflection returning light of the main signal light (reflection light from the line break position) is monitored on the transmitter station. Upon detection of the fact that the power of this reflection returning light exceeds a certain threshold value, light transmission in the transmission station is shut down. However, it can occur that shutting down is impossible depending on the power of the reflection returning light, or that shutting down is performed erroneously. Further, as another control method, when a line break occurs in the transmission fiber, upon detection of the fact that SV light is not received on the receiver station is detected, such is added to the SV signal and is fedback to the transmitter station, thereby shutting down light transmission on the transmitter station. However, since it is necessary to feedback the SV light to the transmitter station at the time of shutting down, it was impossible to shut down light transmission on the transmission station immediately after detection of a line break.

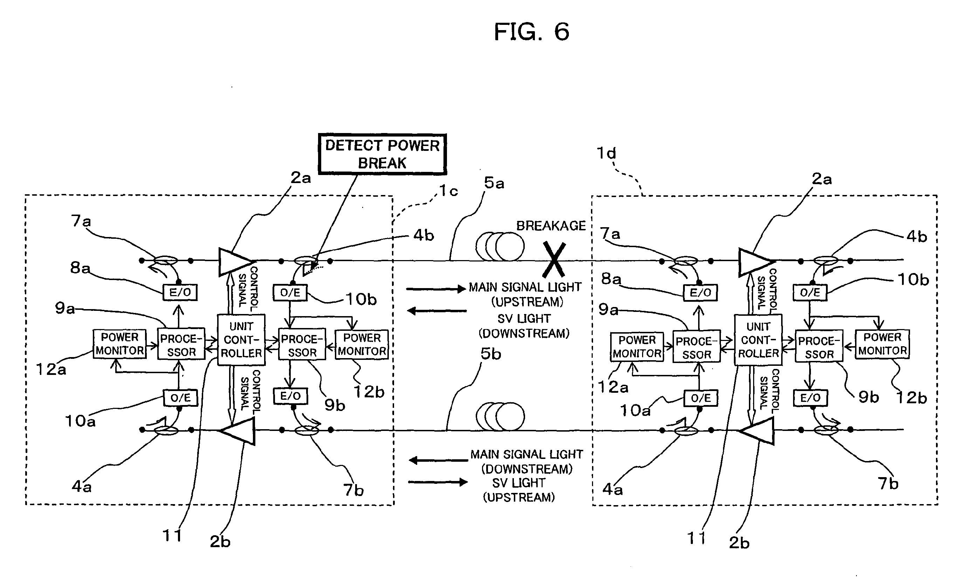

Hence, a description will be made hereinafter of shut down control in the WDM transmission system of the present example with reference to FIG. 6. As shown in FIG. 6, power monitors 12a and 12b are added to the relay stations 1c and 1d, respectively. These power monitors 12a and 12b have a function as a supervisor for an SV signal. For example, by means of monitoring reception power of an SV signal after being optical/electrical conversion by the O/E converters 10a and 10b, it becomes possible to detect a break of the transmission fibers 5a and 5b. Upon detection of a break, such is notified to the unit controller 11 by way of the processors 9a and 9b, so that it becomes possible to perform shut down control (transmission power control) of the optical amplifiers 2a and 2b.

In this instance, power monitoring of SV light can be performed for the light level, that is, before optical/electric conversion by the O/E converters 10a and 10b. Further, although FIG. 6 only shows a relay section between the relay station 1c and the relay station 1d, the same goes for other relay sections. Furthermore, in FIG. 6, also, items with already described reference characters are the same as or similar to those with the already described reference characters.

First of all, as shown in FIG. 6, it is assumed that a line break occurs in the transmission fiber 5a which transmits upstream main signal light (downstream SV light). In this case, the downstream SV light which has been flowing in the direction opposite to the direction of main signal light before the occurrence of the line break is not received by the SV light separating coupler 4b of the relay station 1c which is a transmitter station of the main signal light. Thus, the power monitor 12b of the relay station 1c detects an output break (power break) of the SV signal from the O/E converter 10b.

Then, the power monitor 12b transmits a signal for notifying such (a line break) to the unit controller 11 by way of the processor 9b. As a result, the unit controller 11 performs shut down control of the units (both of the optical amplifiers 2a and 2b) [or lowers the transmission level of the main signal light to the broken transmission fiber 5a down to a predetermined (safe) light level], thereby shutting down (halting or lower the power down to a safe level) the light signal to the transmission fiber 5a to the relay station 1c. As a result, it becomes possible to prevent radiation of high power light from the line break point.

In this instance, when the opposite transmission fiber 5b is broken, the power monitor 12a of the relay station 1d which is a transmitter station of the downstream signal light performs break detection, and at least the optical amplifier 2b is subjected to shut down control (transmission power control).
In this manner, according to the WDM transmission of the present embodiment, since SV light is transmitted through the transmission fiber 5 in the direction opposite to the direction of main signal light, the relay station 1 which is a transmitter station of the main signal light is capable of detecting abnormality in the transmission fiber 5 based on the fact that the SV light cannot be normally received. It is also possible to restrain erroneous operations since shut down control is performed based on whether the SV light is ON or OFF (the presence or the absence of the power of the SV light). In addition, since the transmitter station 1 of the main signal light is capable of performing shutting down of the main signal light or transmission power control immediately (without performing feedback of break detection information by SV light), it becomes possible to shorten the processing time at the time of occurrence of abnormality, so that safety can be improved.

In this instance, the present invention should by no means be limited to the above-illustrated embodiment, and various changes or modifications may be suggested without departing from the gist of the invention.

## Claims

1. A supervisory control light transmitting method for a wavelength division multiplexing (WDM) transmission system having an optical transmission path which transmits WDM light that is main signal light, said method comprising:
transmitting supervisory control light, being capable of generating a Raman gain due to a Raman scattering phenomenon in the wavelength band of the main signal light, in the opposite direction to the direction in which the main signal light is transmitted.

2. A supervisory control light transmitting method as set forth in claim 1, wherein the supervisory control light has a wavelength shorter than the wavelength band of the main light.

3. A supervisory control light transmitting method as set forth in claim 2, wherein the wavelength band of the main signal light is band *C* or band *C* and band *L*.

4. A supervisory control light transmitting method as set forth in any one of claim 1 through claim 3, further comprising:
on a reception end of the supervisory control light,
supervising power of the supervisory control light; and
halting transmission of the main signal light to the optical transmission path, or lowering the transmission level of the main signal light to the optical transmission path down to a predetermined light level, upon detection of abnormality in the optical transmission path as a result of the supervising.

5. A wavelength division multiplexing (WDM) transmission apparatus connected with an optical transmission path to transmit WDM light that is main signal light, which apparatus is an element of a WDM transmission system, said transmission apparatus comprising:
receiving means which receives the main signal light transmitted through the optical transmission path;
supervisory control light generating means which generates supervisory control light having a wavelength being capable of generating a Raman gain due to a Raman scattering phenomenon in the wavelength band of the main signal light; and
supervisory control light transmitting means which transmits supervisory control light, generated by said supervisory control light generating means, to the optical transmission path in the direction opposite to the direction of the main signal light.

6. A wavelength division multiplexing (WDM) transmission apparatus connected with an optical transmission path to transmit WDM light that is main signal light, which apparatus is an element of a WDM transmission system, said transmission apparatus comprising:
transmitting means which transmits the main signal light to the optical transmission path; and
supervisory control light separating means which separates supervisory control light which is transmitted in the opposite direction to the direction of the main signal through the optical transmission path and has a wavelength that can generate a Raman gain in the wavelength band of the main signal light due to a Raman scattering phenomenon; and
supervisory control light receiving means which receives the supervisory control light separated by said supervisory control light separating means.

7. A WDM transmission apparatus as set forth in claim 6, wherein said supervisory control light receiving means includes:
a supervising unit which supervises power of the supervisory control light; and
a controlling unit which halts transmission of the main signal light to the optical transmission path, or lowers the transmission level of the main signal light to the optical transmission path down to a predetermined light level, upon detection of abnormality of the optical transmission path as a result of the supervising.

8. A WDM transmission apparatus as set forth in any one of claim 5 through claim 7, wherein the supervisory control light has a wavelength shorter than the wavelength band of the main light.

9. A WDM transmission apparatus as set forth in claim 8, wherein a wavelength band of the main signal light is band *C* or band *C* and band *L*.
